# EUROPEAN PATENT APPLICATION

(11) **EP 4 675 980 A1**
(43) Date of publication of application: **07.01.2026**
(21) Application number: 25187608.2
(22) Date of filing: 04.07.2025
(51) Int. Cl.: H04L 9/40, G06N 20/00

(54) **SYSTEMS AND METHODS FOR MAINTAINING A GUARDRAIL DATA STRUCTURE**

(30) Priority: 05.07.2024 US 202463667848 P; 05.05.2025 US 202519198189
(71) Applicant: Concentrix CVG Customer Management Delaware LLC, Cincinnati, OH 45202 (US)
(72) Inventor: Peterson, Ryan, Cincinnati, Ohio, 45202 (US)
(74) Representative: Köllner, Malte

(57) **Abstract**

A system for managing a guardrail data structure is provided. The system includes one or more processors; and one or more transitory or non-transitory computer-readable media storing instructions that are executable to cause the one or more processors to perform operations, the operations comprising: receiving, from a first user of a plurality of users of a guardrail data structure, interaction data associated with chat data; processing, by a large language model (LLM), the interaction data to determine an update to at least one cluster membership of at least one content cluster of a plurality of content clusters; transmitting the update of the at least one cluster membership to a remote computing device; and instructing the remote computing device to update the guardrail data structure based on the update to the at least one cluster membership.

## Description

### CROSS-REFERENCE TO RELATED APPLICATIONS

The present application claims priority to US Provisional Application 63/634,848, entitled "Al CHATBOT GUARDRAILS" filed on July 5, 2024, the disclosure of which is incorporated by reference herein in its entirety.

### FIELD

The present disclosure relates generally to systems and methods for maintaining a guardrail data structure.

### BACKGROUND

Generating and maintaining guardrails for chatbots and similar conversational Al systems that are powered by machine-learning models has become an increasingly difficult task, particularly due to the evolving sophistication of potential threats. As these systems are exposed to a variety of user queries, they may be vulnerable to various kinds of threats. These threats can be used to exploit vulnerabilities in the chatbot's behavior, leading it to generate inappropriate, misleading, or otherwise undesirable responses.

Accordingly, improved systems and methods for generating guardrails for chatbots or similar conversational applications are desired in the art. In particular, Algenerated guardrails for chatbots and other conversational applications which provide improved censorship over complex threats would be advantageous.

### BRIEF DESCRIPTION

Aspects and advantages of the invention in accordance with the present disclosure will be set forth in part in the following description, or may be obvious from the description, or may be learned through practice of the technology.

In accordance with one embodiment, a system for managing a guardrail data structure is provided. The system includes one or more processors; and one or more transitory or non-transitory computer-readable media storing instructions that are executable to cause the one or more processors to perform operations, the operations comprising: receiving, from a first user of a plurality of users of a guardrail data structure, interaction data associated with chat data; processing, by a large language model (LLM), the interaction data to determine an update to at least one cluster membership of at least one content cluster of a plurality of content clusters; transmitting the update of the at least one cluster membership to a remote computing device; and instructing the remote computing device to update the guardrail data structure based on the update to the at least one cluster membership.

In accordance with another embodiment, a method for maintaining a guardrail data structure is provided. The method includes receiving, using a computing device, interaction data associated with chat data, wherein the receiving the interaction data comprises receiving the interaction data from a first user of a plurality of users of a guardrail data structure; processing, using a large language model (LLM) operating on the computing device, the interaction data to update at least one cluster membership of at least one content cluster of a plurality of content clusters; transmitting the update of the at least one cluster membership to a remote computing device; instructing, using the computing device, the remote computing device to: fine-tune a guardrail data structure based on the update of the at least one cluster membership; classify, using the guardrail data structure, the chat data into one or more content clusters of the plurality of content clusters based on contextual data; and identify, using the guardrail data structure, flagged data within the chat data.

In accordance with a third embodiment, a system for managing a guardrail data structure is provided. The system includes one or more processors; and one or more transitory or non-transitory computer-readable media storing instructions that are executable to cause the one or more processors to perform operations, the operations comprising: receiving input data comprising chat data, interaction data associated with the chat data, and contextual data; processing the interaction data to generate training data, wherein the training data comprises examples of chat data correlated to examples of cluster memberships; determining, using a large language model (LLM), a plurality of cluster memberships associated with a plurality of clusters as a function of the input data; generating, using the LLM, a guardrail data structure based on the determining; and transmitting the guardrail data structure to a remote computing device.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
Figure 1 is a block diagram of an exemplary system for managing a guardrail data structure in accordance with embodiments of the present disclosure;
Figure 2 is a flow diagram of an exemplary method for training a large language model in accordance with embodiments of the present disclosure;
Figure 3 is a block diagram of an exemplary system for verifying the plurality of interaction data using a verification process in accordance with embodiments of the present disclosure;
Figure 4 is a block diagram of an exemplary system for fine-tuning a boundary of one or more content clusters based on the expanded query dataset in accordance with embodiments of the present disclosure;
Figure 5 is a block diagram of an exemplary master guardrail system in accordance with embodiments of the present disclosure; and
Figure 6 is a flow diagram of an exemplary method for generating a guardrail data structure in accordance with embodiments of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

Generally, the present disclosure is directed to systems and methods for maintaining a guardrail data structure. The system incorporates machine-learning techniques to manage and process interaction data associated with chat data. The system includes processors and computer-readable media that store executable instructions. These instructions enable the system to receive input data that includes both interaction data, chat data, and contextual data. The system is configured to generate and update the guardrail data structure based on the interaction data.

Once the content clusters are established, the system generates a guardrail data structure using the LLM. The system may transmit the guardrail data structure to a remote computing device. The system may instruct the remote computing device to use the guardrail data structure as a data filter to identify and flag problematic data within the chat data. The guardrail data structure may be used to identify specific content that may require moderation or further review.

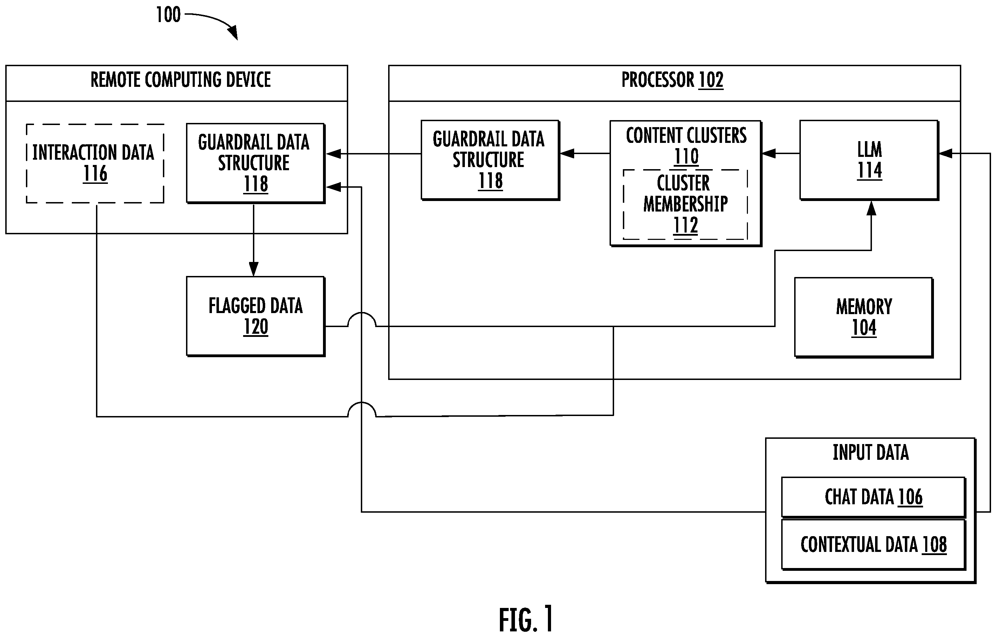

Referring now to the drawings, Figure 1 illustrates systems and methods for generating a guardrail data structure. Figure 1 includes a processor 102, a memory 104, chat data 106, contextual data 108, a plurality of content clusters 110, a cluster membership 112, a large language model (LLM) 114, interaction data 116, a guardrail data structure 118, flagged data 120, and the like.

System 100 includes one or more processors 102 that can be utilized to perform one or more operations. The one or more processors 102 can include any suitable processing device (e.g., a processor core, a microprocessor, an ASIC, a FPGA, a controller, a microcontroller, etc.) and can be one processor or a plurality of processors that are operatively connected. The one or more processors 102 can perform operations in series and/or in parallel. The one or more processors 102 may be dedicated to a particular computing device and/or may be utilized by a plurality of devices to perform processing tasks.

Processor 102 may be designed and/or configured to perform any method, method step, or sequence of method steps in any embodiment described in this disclosure, in any order and with any degree of repetition. For instance, processor 102 may be configured to perform a single step or sequence repeatedly until a desired or commanded outcome is achieved; repetition of a step or a sequence of steps may be performed iteratively and/or recursively using outputs of previous repetitions as inputs to subsequent repetitions, aggregating inputs and/or outputs of repetitions to produce an aggregate result, reduction or decrement of one or more variables such as global variables, and/or division of a larger processing task into a set of iteratively addressed smaller processing tasks. This may be used to train, refine, or otherwise improve any algorithm, machine-learning models, neural networks, and the like mentioned herein. This includes but is not limited to both the LLM 114, the query expansion model 402, and any other machine-learning model or algorithm discussed herein.

Processor 102 may include a single computing device operating independently, or may include two or more computing devices operating in concert, in parallel, sequentially or the like; two or more computing devices may be included together in a single computing device or in two or more computing devices. Processor 102 may include but is not limited to, for example, a computing device or cluster of computing devices in a first location and a second computing device or cluster of computing devices in a second location. Processor 102 may include one or more computing devices dedicated to data storage, security, distribution of traffic for load balancing, and the like. Processor 102 may distribute one or more operations as described below across a plurality of computing devices, which may operate in parallel, in series, redundantly, or in any other manner used for the distribution of tasks or memory between computing devices.

System 100 includes memory 104 which can store data and/or instructions. Memory 104 can include one or more non-transitory computer-readable storage mediums, such as RAM, ROM, EEPROM, EPROM, flash memory devices, magnetic disks, etc., and combinations thereof. The data can include user data, application data, operating system data, etc. The data can include text data, image data, audio data, statistical data, latent encoding data, etc. The instructions can include instructions that when executed by one or more of the processors 102 may cause system 100 to perform operations as described herein.

Memory 104 may store data and/or instructions associated with one or more applications. The one or more applications can include native, factory-set applications and/or downloaded applications. The applications may include one or more messaging applications, one or more image capture applications, one or more social media applications, one or more productivity applications, one or more map applications, one or more device management applications, one or more browser applications, one or more censorship applications, and the like. In some implementations, the applications can include one or more applications communicatively connected to one or more server computing systems for providing access to a platform. For example, the applications can include an application for maintaining a guardrail data structure.

### RECEIVING INPUT DATA INCLUDING CHAT DATA, INTERACTION DATA, AND CONTEXTUAL DATA

The operations may include receiving input data that includes chat data 106. As used in the current disclosure, chat data 106 refers to the collection of information generated during interactions with a chatbot or similar conversational Al system ("Al chat system"). Chat data 106 may include any information exchanged between the user and the Al chat system during a conversation. This information may include textual data, image data, video data, audio data, documents, and any combination thereof. For example, chat data 106 may include information related to both the queries (which can be in the form of questions, requests, or prompts) posed by users and the responses generated by the Al chat system. The textual content of the queries and responses in chat data 106 may include raw data that provides the exact language used in the interaction.

Chat data 106 may include metadata associated with each query or query response. Chat data 106 may include an identifier for each user or session. This identifier may allow system 100 to track the user's interaction history with the chatbot and patterns of interaction. Chat data 106 may include temporal information associated with the query or query response. This temporal information may include timestamps marking when each query or response was made. Chat data 106 may include information about the duration of a conversation. Chat data 106 may include metadata related to the specific version or model of the chatbot or similar system that is being used. Chatbots may be iteratively updated over time, tracking the version of the chatbot may allow for the monitoring of performance across different iterations.

With continued reference to Figure 1, the operations may include receiving input data that includes contextual data 108. As used in the current disclosure, contextual data 108 refers to information surrounding each query and response with an Al chat system. Contextual data 108 may be designed to provide a large language model (LLM) 114 with contextual information about the interaction between the user and the conversational Al system.

In an embodiment, contextual data 108 may include information that frames the interaction between the user and the conversational Al system. Contextual data 108 may include information about the individual user interacting with the system. This can include details such as the user's history of interactions, preferences, demographic information, geographic location, past behavior patterns, and the like.

Contextual data 108 may include all information that is relevant to the session of the Al chat system. This may include information regarding the sequence of exchanges, the actions taken during the session, and the state of the conversation at any given moment. Contextual data 108 may include data points such as the specific queries a user has submitted in the course of the current session, the flow of those exchanges, and the chatbot's responses. For instance, if a user repeatedly asks questions that indicate potential violations (such as attempting to access prohibited content, asking harmful or inappropriate questions, or engaging in suspicious behavior), this can be flagged based on the session's history. The system 100 may be configured to track the continuity of the conversation to assess whether the user's actions are consistent with previous interactions or whether they are deviating in ways that could indicate non-compliance with set guidelines.

In some cases, contextual data 108 may include information about domain-specific context. Domain-specific context may be information related to the primary purpose or goal of the Al chat system. Domain-specific context may refer the subject matter or field of the conversational Al system. The chatbot may be configured to focus on a particular domain, such as customer service, healthcare, finance, and the like. For example, if the Al chat system is configured to facilitate a conversation around customer service for a clothing brand, contextual data 108 may provide this context to system 100.

With continued reference to Figure 1, the operations may include receiving input data that includes interaction data 116. As used in the current disclosure, interaction data 116 refers to the information collected from users in response to or during their engagement with content, particularly chat data 106. Interaction data 116 can be used to capture the ways users or other third parties interact with system 100. The interaction data 116 may be used to quantify how portions of chat data 106 or other content is perceived by the system users. Interaction data 116 may come in a variety of forms, such as user clicks, responses, ratings, comments, thumbs up/thumbs down, likes/dislikes, and other forms of engagement. It may also include implicit metrics like response time, frequency of interaction, and user satisfaction levels.

Interaction data 116 can be used to categorize and evaluate the appropriateness of the user's query or the system's query responses. For example, if the Al chat system responds to a user's query, interaction data 116 may be captured related to that response. The interaction data 116 may be used to describe what the user's perception is of the appropriateness of the content of the user query or the query response. The interaction data 116 may be used to provide feedback about whether one or more users found the response satisfactory, whether they asked follow-up questions, or if they disengaged after receiving an answer. In some cases, interaction data 116 may be used to highlight areas where the chat data 106 generated by the system may need refinement. In these cases, the interaction data may be used as a feedback loop to the system to improve the evaluation and categorization of chat data 106 based on appropriateness or other conversational content

Interaction data 116 can be used to flag chat data 106 by highlighting content that may require further attention, categorization, or refinement. For example, if a user flags a particular piece of chat data 106 as inappropriate, this action can trigger an immediate flagging mechanism within the system. The flagged content then becomes a candidate for further review, reassessment, or reclassification, depending on the nature of the feedback.

### GENERATING THE TRAINING DATA BASED ON CHAT DATA AND/OR INTERACTION DATA

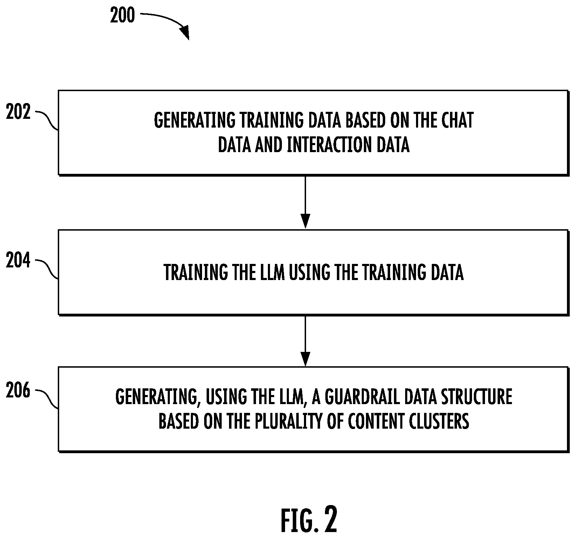

Referring now to Figure 2, an exemplary embodiment of a method 200 for training a large language model is provided.

At step 202, the method may include generating the training data based on input data, such as chat data 106 and/or interaction data 116 (see Figure 1). As used in the current disclosure, training data refers to a dataset used to train a machine-learning model, LLM, or another algorithm. Training data may include sets of input-output pairs where the inputs are the features that are derived from raw data (e.g. chat data 106, contextual data 108, and/or interaction data 116), and the outputs are the corresponding labels or target values that the model aims to predict (e.g. generating a guardrail data structure 118, generating content clusters 110, and/or fine-tuning the cluster membership 112). The training data may consist of a structured dataset derived from chat data 106, interaction data 116, content clusters 110, and/or cluster memberships 112 that encapsulates the relationships among various categories of data elements. This training data may include multiple entries, with each entry representing exemplary chat data 106 correlated to exemplary cluster membership 112. Additionally or alternatively, the training data may include a plurality of entries correlating exemplary cluster memberships 112 to exemplary content clusters 110.

The training data may include a plurality of data entries containing a plurality of inputs that are correlated to a plurality of outputs for training a processor by a machine-learning process. In an embodiment, training data may include exemplary chat data 106 correlated to exemplary cluster membership 112. In an embodiment, training data may be iteratively updated as a function of the input and output results of past iterations of LLM 114 or other machine-learning model mentioned throughout this disclosure.

In an embodiment, the training data may be organized according to the specific categories of data elements represented by the chat data 106, interaction data 116, content clusters 110, and/or cluster memberships 112. This organization may involve associating the data with descriptors that characterize its classification. For example, categorizing the chat data 106 according to its predicted content clusters 110. In an additional example, categorizing the content clusters 110 according to their cluster memberships 112.

Additionally, training data may include elements that are not explicitly categorized. In such cases, machine-learning algorithms can apply natural language processing techniques and correlation detection methods to sort and categorize these elements. For example, multi-word phrases may be statistically identified and categorized as new linguistic elements based on their frequency and co-occurrence, allowing the model to adapt to emerging patterns in the data. This flexibility enables the same training data to be applicable across various machine-learning algorithms, enhancing its versatility.

Generating the training data may include filtering, sorting, and selection processes associated with the training data. These processes may be implemented using both supervised and unsupervised machine-learning models. In some cases, a training data classifier may be utilized to categorize inputs based on established criteria, identifying clusters of similar data and associating them with relevant labels. This training data classifier may employ various algorithms, including linear classifiers, decision trees, and neural networks, to organize the training data effectively. As a result, training data can be categorized in ways that reflect specific populations or phenomena relevant to the analytical goals of the model.

In an embodiment, training examples for the training data may be selected from a broader population based on relevant analytical needs. This selection process may be used to verify that the training data captures a comprehensive range of scenarios the model may encounter. For each input category, the process may involve choosing representative examples across the spectrum of possible values, ensuring that the dataset reflects the statistical distribution of the underlying phenomena.

In some cases, the method 200 may include implementing a sanitization process to improve the quality of the training data. This involves identifying and removing outliers or poorly constructed examples that could skew the model's learning process. Examples deemed to have low signal-to-noise ratios or that fall outside predefined thresholds may be eliminated to ensure the training data contributes positively to model convergence and overall effectiveness.

### TRAINING THE LARGE LANGUAGE MODEL USING THE TRAINING DATA

At step 204, the method may include training the LLM 114 (see Figure 1) using the training data. As used in the current disclosure, a large language model may refer to a deep learning data structure that can recognize, summarize, translate, predict and/or generate text or other content. Large language models may be trained on large sets of data that include but are not limited to training data. In an embodiment, the LLM 114 may include one or more architectures based on the capability requirements of an LLM. Exemplary architectures may include, without limitation, GPT (Generative Pretrained Transformer), BERT (Bidirectional Encoder Representations from Transformers), T5 (Text-To-Text Transfer Transformer), and the like. Architecture choice may depend on the capability needed such as generative, contextual, or other specific capabilities.

In an embodiment, the LLM 114 may be consistent with any machine-learning model described throughout this disclosure. The inputs to the LLM 114 may include actual or exemplary versions of chat data 106, contextual data 108, content clusters 110, cluster memberships 112, and the like. Outputs to the LLM 114 may include chat data 106 that is classified into one or more content clusters 110, modified cluster memberships, content clusters 110, and/or a guardrail data structure 118.

The LLM 114 may be trained using training data that is generated from chat data 106, along with other training sets. Training the LLM 114 may encompass both general and specific training approaches. Generally training the LLM 114 refers to the initial phase where the model is exposed to a diverse training set that includes a wide array of subjects, datasets, and fields. This foundational training helps establish a broad understanding of language and context.

Following this general training, the LLM 114 may undergo specific training, which focuses on refining the model's capabilities using specialized training data derived from the chat data 106. This specific training is designed to enhance the LLM's 114 understanding of particular correlations and nuances relevant to its intended applications. For example, training data may include information or data that has been tailored to a specific user or use case. This may include exemplary chat data 106, historical content clusters, and cluster memberships 112 that are associated with the particular types of content that is to be censored.

In an embodiment, training the LLM 114 with this training data may be carried out using a supervised machine-learning process, where the model learns from input-output pairs. Conversely, the general training phase may employ an unsupervised approach, allowing the LLM 114 to learn patterns and structures in the data without explicit labels. Once the general training is complete, the model can be specifically trained on task-specific data that directly correlates with the desired outputs, adapting its performance to meet particular objectives.

The training process may involve iteratively adjusting the model's parameters, specifically weights and biases, either randomly or by leveraging a pretrained model as a starting point. During the training phase, the LLM 114 may learn to minimize a defined loss function, which quantifies the difference between its predicted outputs and the actual target values. Once the model is generally trained, specific training with the generated training data fine-tunes its capabilities, ensuring that it can effectively address the specific tasks it is designed for.

Fine-tuning may include optimizing the model's performance by adjusting hyperparameters such as learning rate, batch size, and regularization techniques. This optimization process is crucial for achieving the best performance and ensuring convergence during training. In an embodiment, fine-tuning the LLM 114 may employ Low-Rank Adaptation (LoRA), a technique that modifies a subset of the model's parameters. This approach enhances computational efficiency by allowing targeted updates without the need to retrain the entire model from scratch. The parameters updated through LoRA may specifically relate to the tasks or domains relevant to the training data, enabling the LLM 114 to excel in its designated applications.

In an embodiment, the method may incorporate user feedback to train the LLM 114. For example, the LLM 114 may be trained using past inputs and outputs of a previous iteration of the LLM 114. In some embodiments, if user feedback indicates that an output of LLM 114 was "bad," then that output and the corresponding input may be removed from training data used to train LLM 114, and/or may be replaced with a value entered by, e.g., another user that represents an ideal output given the input the LLM 114 originally received, permitting use in retraining, and adding to training data; in either case, LLM 114 may be retrained with modified training data as described throughout this disclosure.

In an embodiment, training data may be created from crowdsourced feedback of chat data 106, such as interaction data 116. This may be done by leveraging the collective input of a community that flags and categorizes various pieces of chat data 106 or other content based on predefined criteria. The feedback associated with the chat data 106 may be collected from diverse user interactions, and the community is engaged to assess and tag the content according to specific categories associated with the content clusters 110. By tagging content with relevant labels, the community effectively creates a labeled dataset that can be used to train the LLM 114.

In an embodiment, the interaction data 116 received from crowdsourcing community may flag specific messages, conversations, and Al chat system responses, marking them with labels such as "harassment," "spam," "misinformation," or other content categories. The community may also rate the severity or appropriateness of certain content, adding more granular annotations to enhance the model's understanding of content context and potential impact. Additionally, the community can provide feedback on whether certain flagged messages fall within borderline or ambiguous cases, helping the model learn to navigate gray areas where automated classification might otherwise be challenging.

Once the chat data 106 has been flagged and categorized by the community, this labeled dataset can be used as training data for LLM 114. In some cases, the LLM 114 may be configured to learn to predict the appropriate labels (*i.e.* content clusters 110, cluster memberships 112) for new chat data 106 based on patterns and associations identified during training. As the training dataset grows over time with continuous community participation, the LLM's 114 performance can improve, adapting to new trends and language usage.

In some embodiments, an accuracy score may be calculated for LLM 114 using user feedback. For the purposes of this disclosure, an accuracy score is a numerical value concerning the accuracy of the output of a machine-learning model. For example, the feedback from the user may be averaged to determine an accuracy score. The accuracy score may indicate a degree of retraining needed for a machine-learning model such as the LLM 114; processor 102 may perform a larger number of retraining cycles for a higher number (or lower number, depending on a numerical interpretation used), and/or may collect more training data for such retraining, perform more training cycles, apply a more stringent convergence test such as a test requiring a lower mean squared error, and/or indicate to a user and/or operator that additional training data is needed.

### GENERATING A GUARDRAIL DATA STRUCTURE BASED ON THE PLURALITY OF CONTENT CLUSTERS

At step 206, the method includes generating, using the LLM 114, a guardrail data structure 118 based on the plurality of content clusters 110. As used in the current disclosure, the guardrail data structure 118 is a data structure designed to categorize chat data 106 based on their membership within one or more content clusters 110. The guardrail data structure 118 may be a data filter that can be generated by the LLM 114 based on the classification of chat data 106 into content clusters 110. This data structure acts as a set of predefined rules, boundaries, or filters that guide the categorization of new incoming chat data 106. The guardrail data structure 118 may be used to classify the incoming chat data 106 according to the content clusters 110. The guardrail data structure 118 may be configured to organize the content from the chat data 106 based on their classification to the plurality of content clusters 110. The LLM 114 may label, tag, and organize the chat data 106 based on their membership in the content clusters 110. This labeling process provides structure to the chat data 106. This structure is used to generate the guardrail data structure 118.

The guardrail data structure 118 may be created by analyzing existing chat data 106 and the content clusters 110 to which it has been classified. As the LLM 114 categorizes exemplary chat data 106 into specific content clusters 110, the guardrail data structure 118 is formed based on the patterns, themes, and semantic relationships that define each content cluster 110. These patterns can include key phrases, topics, behaviors, or metadata that are associated with the chat data 106 in a particular cluster. By learning from previous classifications, the LLM 114 generates guardrails that effectively define the boundaries of each cluster.

Once generated, the guardrail data structure 118 serves as a data filter for new incoming chat data 106. As new pieces of chat data 106 arrive, the system uses the guardrail data structure 118 to assess whether the data aligns with the characteristics of existing content clusters 110. If the new chat data 106 falls within the defined parameters of a content cluster 110, it is classified accordingly. If the data falls outside these boundaries, it can either be flagged for further review or placed in a separate, undefined category for additional processing.

The guardrail data structure 118 may be iteratively improved as the LLM 114 updates or fine-tunes the boundaries of the content clusters 110 based on feedback from interactions with users (e.g. interaction data 116). As chat data 106 is continuously processed and classified, the guardrail data structure 118 can be adjusted to account for new content trends, emerging topics, or shifts in user behavior. For instance, if new patterns emerge within the data that were not previously captured, the guardrail data structure can be updated to incorporate these changes, allowing the system to adapt to new types of content.

System 100 may process incoming chat data 106 by first transforming it into embeddings or vectors using techniques like word embeddings, sentence embeddings, or other advanced deep learning models. These embeddings are dense, high-dimensional vector representations of the chat data 106 that capture the semantic and contextual meaning of the content. By converting the chat data 106 into embeddings, the system can efficiently analyze and compare large volumes of text while maintaining the nuances of language, tone, and intent. Each piece of chat data is mapped into this high-dimensional vector space, where similar pieces of content are positioned closer together based on shared semantic features, while dissimilar content is placed farther apart.

Once the embeddings are generated, the system utilizes the guardrail data structure 118 to categorize the embeddings into appropriate content clusters 110. The guardrail data structure 118 acts as a set of filtering rules, which are built based on the characteristics of each content cluster. It guides the system in determining whether a newly generated embedding belongs to an existing content cluster 110 or whether it needs to be flagged for review. Each content cluster 110 may be defined by certain parameters captured in the guardrail data structure 118. When a new embedding is generated, it is compared against the guardrails for each content cluster 110 to determine which content cluster 110, if any, the embedding best aligns with. If the embedding falls within the boundaries of a cluster, it is classified accordingly.

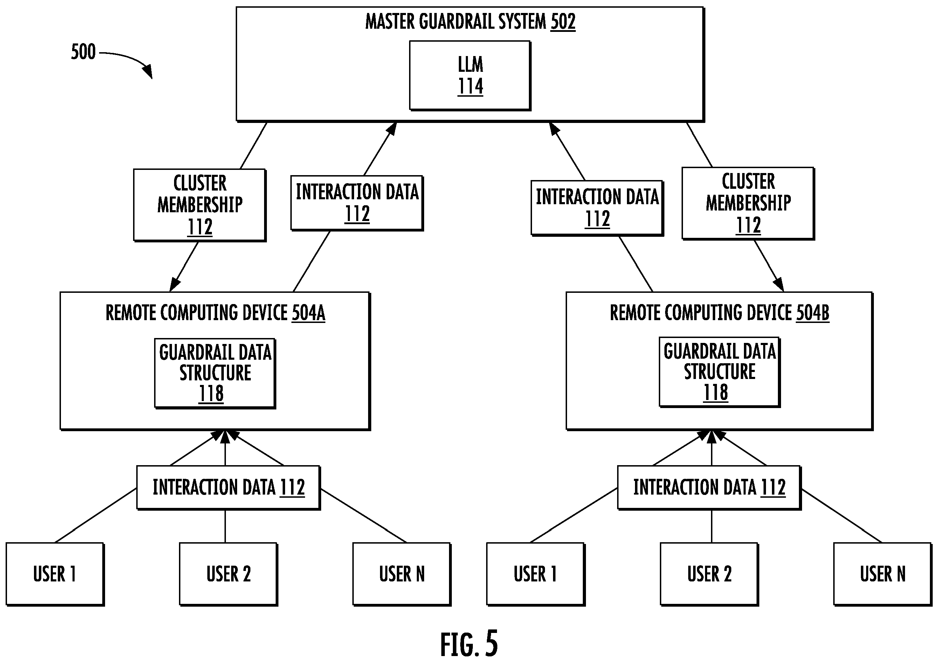

In an embodiment, the guardrail data structure 118 may be transmitted to a remote computing device. The remote computing device may be located in a different physical location from processor 102. The transmission of the guardrail data structure 118 may occur over a network, ensuring that the data is securely sent from the processor 102 to the remote computing device. The remote computing device could be associated with a client device, such as an entity's server, network, cloud computing system, tablet, or computer, enabling real-time filtering and moderation of chat data 106. The remote computing device may be designed to apply the guardrail data structure 118 to the incoming chat data 106 to enforce specific filtering rules. The remote computing device may be the same or substantially similar to the remote computing device discussed herein below with reference to Figure 5.

Once the guardrail data structure 118 is transmitted and received by the remote computing device, the processor 102 may instruct the remote computing device to apply the guardrail data structure 118 to the incoming chat data 106. This may include classifying the chat data into at least one content cluster of a plurality of content clusters based on the contextual data. By categorizing the chat data into these clusters, the system can more accurately identify patterns or specific types of content that may require filtering, moderation, or additional action.

### CLASSIFYING CHAT DATA INTO AT LEAST ONE CONTENT CLUSTER OF A PLURALITY OF CONTENT CLUSTERS BASED ON THE CONTEXTUAL DATA

With continued reference to Figure 1, the guardrail data structure 118 may be used to classify the chat data 106 into at least one content cluster of a plurality of content clusters 110 based on the contextual data 108. As used in the current disclosure, a content cluster refers to a group of related information, topics, or resources that share a common theme or subject matter. Content clusters 110 may be structured representations of data that are used to categorize the content of the chat data 106. In an embodiment, each content cluster of the plurality of content clusters 110 may represent a type of user query or query response. More specifically, each content cluster 110 may represent a class, category, or type of undesirable user query or a user query response.

In an embodiment, the content clusters 110 may be organized into two or more distinct sub-sets based on the nature of the topics they represent. The first subset of content clusters may be associated with benign or allowed topics, representing content that is desirable or acceptable within the system 100. These clusters may encompass a wide range of appropriate discussions and content that aligns with the system's guidelines. The second subset of content clusters may represent content that violates censorship guidelines or is deemed undesirable based on predefined rules. These clusters contain topics or discussions that are flagged due to their potential to be harmful, offensive, or inappropriate according to the system's established censorship standards.

These content clusters 110 within the second subset of content clusters may include user queries or query response that address attempts to deceive or manipulate Al systems and users through various methods, such as adversarial inputs, model poisoning, and data poisoning. Additionally, these content clusters 110 within the second subset of content clusters may include chat data 106 related to attempts to bypass content moderation and security systems through tactics like prompt injection or evasion attacks. In some cases, these content clusters 110 within the second subset of content clusters may focus on chat data 106 that depict behaviors that introduce bias or target specific actions for malicious purposes, such as reinforcing biased decision-making in Al or manipulating recommendation algorithms to unfairly promote certain outcomes.

Moreover, these content clusters 110 within the second subset of content clusters may include content clusters relating to inappropriate language, NFSW content, sexually explicit content, deceptive business practices, deceptive model manipulation, harmful or malicious content, content related to fraudulent activities, adversarial inputs, model poisoning, data poisoning for targeted manipulation, prompt injection, evasion attacks, bias injections, contextual manipulation, reinforcement learning manipulation, evasion of content monitoring systems, model gaming, and the like. One skilled in the art should understand that this list of content clusters is not an exhaustive list, but rather an exemplary list.

In an embodiment, the guardrail data structure 118 may be used to classify the chat data 106 into at least one content cluster of a plurality of content clusters 110 based on the provided contextual data 108. This classification process may involve analyzing the keywords, intent, and contextual information associated with the chat data 106 to effectively group similar user queries and query responses together. By leveraging the contextual data 108, the guardrail data structure 118 can identify key themes and categorize the chat data 106 and into the appropriate content cluster 110.

Moreover, by continuously analyzing incoming chat data 106 and their associated content clusters 110, the guardrail data structure 118 may iteratively adapt and refine the content clusters 110 over time, ensuring that they remain relevant and comprehensive as user queries, query responses, and other source material for the content clusters 110 evolve.

In an embodiment, the guardrail data structure 118 may be configured to classify the chat data 106 into at least one content cluster of a plurality of content clusters 110 based on the chat data's 106 cluster membership 112. As used in the current disclosure, cluster membership 112 refers to the specific criteria, characteristics, or attributes that define what content belongs to that cluster and what content does not. These boundaries establish the limits that distinguish one cluster from another and ensure that content is accurately categorized based on its shared features or behaviors. For example, the boundary of an "evasion attacks" cluster might be defined by content designed to deliberately bypass security or moderation systems, such as inputs that manipulate Al algorithms to avoid detection or exploit vulnerabilities in a model, while excluding content that is simply harmless or unintended. The cluster membership 112 may be determined by a combination of factors such as the intent of the content, its context, and the risk it poses. These factors help create clear divisions between clusters, ensuring that the content within each group aligns with the intended classification. In some cases, boundaries may be dynamic, shifting over time as new content patterns emerge or as the system becomes more adept at recognizing subtle differences.

Cluster membership 112 may be defined based on the proximity of a content vector, or embedding, to a predefined center point within a high-dimensional vector space. Processor 102 may be configured to convert the plurality of chat data 106 into one or more representative vectors or embeddings. These vectors or embeddings may be created using techniques such as word embeddings, sentence embeddings, or other forms of deep learning-based representations. These embeddings may be used the semantic and contextual meaning of the content in a way that enables the system to map similar types of content closer together in the vector space, while dissimilar content is placed further apart. The centroid of each content cluster 110 may be used to define cluster membership 112 based on the average position of the content embeddings within that content cluster 110. Whereas the proximity of a new data point to this center point may be used to determine its membership in the cluster.

To define cluster membership 112, the method may be used to measure the distance between the vector of a given chat datum 106 and the centroid of a cluster. If the distance is below a certain threshold, the content may be classified as a member of that cluster. The threshold may be ideratively adjusted based on factors such as the density of the cluster, the distribution of embeddings, and the model's confidence in the classification.

### FINE-TUNING A BOUNDARY OF THE PLURALITY OF CONTENT CLUSTERS BASED ON A PLURALITY OF INTERACTION DATA

With continued reference to Figure 1, the operations include processing, by the LLM 114, the interaction data 116 to determine an update to at least one cluster membership 112 of at least one content cluster of a plurality of content clusters 110. Updating a boundary of one or more content clusters may also be referred to as fine-tuning or defining the cluster membership 112. When users interact with the chat data 106 their interaction data 116 may indicate whether the content of the chat data 106 is appropriately classified within a given content cluster 110. For instance, if a group of users express that a piece of chat datum that falls near the edge of a cluster, outside of a cluster, and/or overlaps with a second cluster, the system 100 may be configured to update the cluster membership 112 to better capture the nuances of the chat data 106 or content that truly belongs within it. This process helps refine the criteria that determine cluster membership, ensuring that the content most aligned with the cluster's characteristics is correctly categorized.

The system can leverage interaction data 116 to fine-tune the proximity thresholds that define cluster membership 112, enhancing the accuracy of content classification by ideratively adjusting the cluster boundaries. As users' engagement with chat data 106 is recorded, their interaction data 116 can be used to provide feedback that is used to fine-tune the proximity threshold. This feedback may include both implicit (e.g., response time, engagement level, navigation patterns) and explicit (e.g., ratings, flags, direct comments). This feedback serves as a real-time signal indicating the relevance and appropriateness of chat data 106 within a given content cluster.

When a number of users flag a piece of chat datum 106, the system can interpret this as a misalignment between the current cluster membership 112 of the content cluster 110 and user's expectations. System 100 may be configured to update the cluster membership 112 to better align with the user's expectations. For example, if one or more users mark certain content as harmful or inappropriate, and this feedback is recurrent across multiple users or instances, it may suggest that the content should be reclassified to a different content cluster 110 or the cluster membership 112 should be updated. This may include reclassifying a piece of chat data 106 from a first sub-set of content clusters to a second sub-set of content clusters. Based on this implicit or explicit feedback, the system can adjust the proximity thresholds within the clustering algorithm to ensure that the affected content is correctly classified.

The proximity thresholds that define cluster membership 112 can be recalibrated based on a variety of factors informed by interaction data 116. These thresholds determine how close a content embedding (vector representation of the chat data 106) must be to the centroid of a cluster to be classified as a member. If users indicate that content near the boundary of a cluster is misclassified, the system can adjust the radius or tolerance for cluster membership 112 by recalculating the proximity between content embeddings and the cluster centroid. For instance, content that is marginally close to the boundary but receives negative feedback may be excluded from the cluster, while content that is on the periphery but receives positive feedback may be included. This adjustment ensures that the system's classification becomes more aligned with how users perceive content.

Moreover, the feedback loop created by interaction data 116 enables the system to continuously learn and adapt. By incorporating user feedback into the clustering process, the system can adjust the cluster boundaries in a way that reflects emerging patterns, user preferences, and context changes. This adjustment could be implemented through machine-learning techniques, such as reinforcement learning or supervised fine-tuning of the clustering algorithm. For example, if the feedback consistently indicates that a set of content embeddings should belong to a different cluster, the system may retrain or fine-tune the model using a more refined set of training data that reflects the new cluster definitions. Over time, this process improves the system's ability to recognize and classify content, ensuring that the proximity thresholds and cluster boundaries evolve in response to real-world interactions.

The guardrail data structure 118, operating on the remote computing device, may transmit interaction data 116 to processor 102 for further analysis and refinement of the content filtering process. Once the interaction data 116 is received by the processor 102, the LLM 114 may analyze the interaction data 116 to determine that an update to at least one cluster membership 112 is required. This means the LLM 114 could adjust how chat data 106 is classified into the various content clusters 110, potentially moving certain types of content between clusters based on updated contextual insights. For example, the LLM 114 might identify a shift in the nature of certain conversations, recognizing new patterns or topics that were not previously categorized. It may then make an update to the cluster membership 112, such as moving content from a first sub-set of content clusters to a second sub-set of content clusters. Once the LLM determines the necessary update to the cluster membership 112, it transmits that update back to processor 102.

The processor 102, after receiving the updated cluster membership 112 from the LLM, may then instruct the remote computing device to update the guardrail data structure 118. This update ensures that the remote computing device operates with the most accurate and relevant filtering rules, reflecting the new classification of content. The updated guardrail data structure 118 will include the changes to the content clusters and their membership, guiding the filtering and moderation process in accordance with the LLM's recommendations. The remote computing device will then apply this refined guardrail data structure 118 to the ongoing chat data 106, ensuring that the filtering and moderation process adapts to new patterns and contextual shifts, improving the overall effectiveness of the system in managing content in real-time.

### IDENTIFYING, USING THE GUARDRAIL DATA STRUCTURE, FLAGGED DATA WITHIN THE CHAT DATA

With continued reference to Figure 1, the operations further comprise instructing the remote computing device to identify, using the updated guardrail data structure 118, flagged data 120 based on the chat data 106. As used in the current disclosure, flagged data 120 refers to a subset of chat data 106 that has been identified as potentially deviating from predefined censorship guidelines or content boundaries. These deviations are detected using the guardrail data structure 118, which classifies the chat data 106 into a variety of content clusters 110. When the system processes incoming chat data 106, it evaluates whether the data aligns with the established characteristics and themes of any existing content clusters 110. If the chat data 106 falls within certain clusters, it is flagged for further review. This flagging mechanism helps maintain control over the quality and appropriateness of the content being processed, ensuring that data that may be inappropriate or non-compliant with the system's rules can be identified and addressed promptly.

The guardrail data structure 118 may be used to identify flagged data 120 by providing a set of predefined rules or boundaries that govern what constitutes acceptable membership within each content cluster. These boundaries are shaped by the content's thematic elements, key phrases, and other factors that define each cluster. When incoming chat data 106 is evaluated, the system checks whether the data aligns with these characteristics. In an embodiment, the chat data 106 may be classified as a sub-set of content clusters 110 that are aligned with topics that violate the censorship guidelines as outlined by the guardrail data structure 118. This classification may trigger the identification of flagged data 120. In an additional embodiment, if the chat data 106 does not fit within the parameters of any content cluster 110, it may indicate that the data violates specific guidelines. This deviation may trigger the identification of flagged data, which is then marked for further analysis.

Flagged data 120 may be used to highlight chat data 106 that violates the censorship guideline to potential issues with incoming content. The identification of flagged data 120 may be based on several factors, such as the presence of sensitive or inappropriate language, the emergence of new topics not captured by existing clusters, language that was prohibited based on its membership in a cluster, and the like. Once identified, flagged data does not immediately become part of the system's output; instead, it is isolated for closer inspection. This allows the system to either adjust the boundaries of existing content clusters to accommodate the new data, flag the data for manual review by a moderator, or flag the data to be removed by the system.

Once flagged data is identified, the system may take one or more steps to address the potential issues or deviations it has detected. This may include removing the flagged data 120 from further processing or interaction within the system to prevent any inappropriate content from being presented to users or affecting the overall output. Additionally, the steps may include issuing a warning or notification to the user or the system administrator, depending on the severity of the flag, to alert them to the presence of content that deviates from the established guidelines. This notification serves as a means of ensuring that appropriate action can be taken in response to the flagged data, whether that involves manual review, content removal, or an investigation into potential system misclassifications.

In addition to removal and notification, the system may adjust the boundaries of the existing content clusters to accommodate new types of data that have triggered the flag. This adjustment ensures that emerging trends or previously unclassified content can be properly accounted for in the future, maintaining the system's accuracy and responsiveness. If the flagged data does not align with an existing cluster or if its content requires more nuanced analysis, the system can flag it for manual review by a moderator.

### VERIFYING, BY THE LLM, THE PLURALITY OF INTERACTION DATA USING A VERIFICATION PROCESS

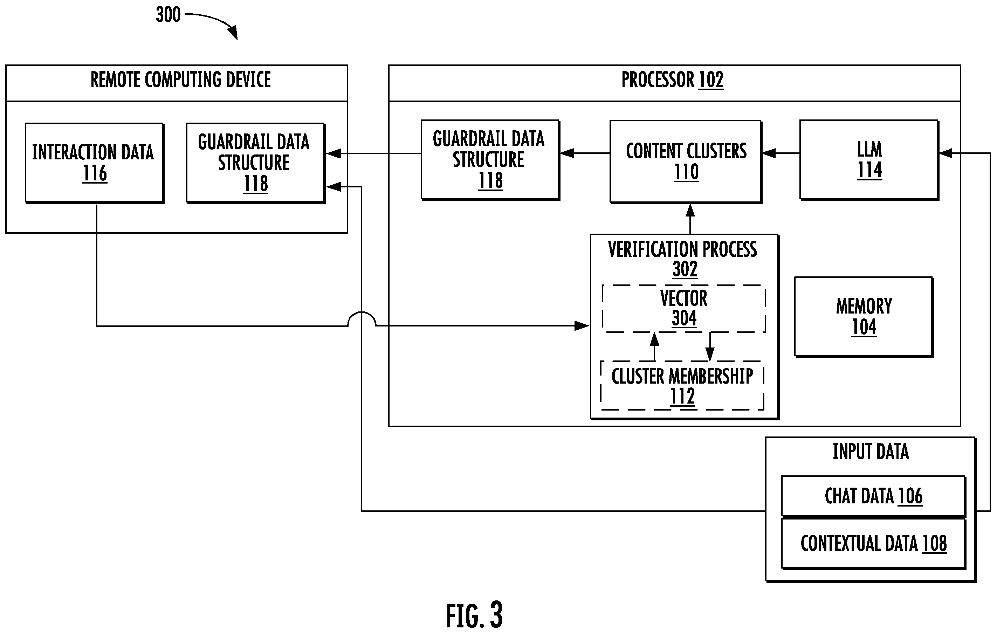

Referring now to Figure 3, an exemplary block diagram of a system for verifying the plurality of interaction data using a verification process 302. As used in the current disclosure, a verification process refers to a process that is configured to analyze and evaluate interaction data 116 to ensure that chat data 106 is accurately classified in accordance with established censorship guidelines. The verification process 302 may be used to assess whether the categorization of chat data 106 as a violation of censorship guidelines is valid and consistent with the guardrail data structure 118. The guardrail data structure 118 provides a framework of rules, boundaries, and predefined content clusters that classify chat data 106 into acceptable and non-acceptable categories (e.g. first sub-set of content clusters or second sub-set of content clusters). The verification process 302 may be used to ensure that content flagged by the interaction data 116 genuinely falls within the boundaries of undesirable content as set by the guardrails and prevents errors such as false positives (incorrectly flagged content) or false negatives (missed violations).In an embodiment, the verification process 302 may be performed by processor 102 or LLM 114. The verification process 302 may be done prior to updating cluster memberships 112.

The verification process 302 may include reviewing the interaction data 116, flagged chat data, contextual data, and its associated metadata to cross-check whether the content has been properly categorized to a sub-set of content clusters 110. The verification process may evaluate the contextual meaning of the data flagged by the interaction data 116. By comparing flagged content against the parameters defined in the guardrail data structure 118, the verification process 302 ensures that the content does, indeed, breach the established guidelines.

In some embodiments, verification process 302 might also include an analysis of the expanded query dataset 404, as discussed in greater detail herein below, to confirm whether the identified flagged terms and their synonyms truly correspond to the guidelines set forth in the guardrails.

To implement the verification process, the system 300 may be configured to process, by the LLM, the at least one chat datum 106 to generate a vector 304 associated with the flagged chat data. This vector may be created using natural language processing (NLP) techniques, such as word embeddings, sentence embeddings, or other deep learning models that convert the chat data 106 as flagged by the interaction data 116 into vectors 304. These vectors 304 may be used to capture the semantic meaning, tone, context, and other linguistic features of the chat data 106, allowing system 300 to understand the content beyond just the words used. The resulting vector 304 is a dense, numerical representation that encodes the underlying meaning of the flagged chat data 106.

System 300 may be configured to compare the vector 304 against the cluster memberships 112 of the plurality of content clusters 110. Each content cluster 110 may be represented by its own set of vectors that characterize the types of content contained within it. System 300 performs a similarity check, determining how closely the generated vector 304 of the flagged chat data 106 aligns with the vectors 304 representing the content clusters 110. If the flagged chat data's 106 vector 304 falls within the boundaries of a violation-related cluster, it is considered to be an accurate classification of a violation. However, if the vector 304 does not align with the predefined clusters or falls outside their boundaries, the system identifies a discrepancy.

In some cases, the verification process may involve human intervention, especially for more ambiguous cases where the vector 304 does not align with the predefined clusters or falls outside their boundaries. In these situations, the flagged data can be escalated to a content moderator or reviewer who has the expertise to make a final decision on whether the content violates the guidelines.

Additionally, the verification process 302 provides feedback to the guardrail data structure 118, allowing it to adapt and improve over time. If the verification process identifies patterns of misclassification or gaps in the guardrails, adjustments can be made to the content clusters or the rules governing them.

### FINE-TUNING A BOUNDARY OF ONE OR MORE CONTENT CLUSTERS BASED ON THE EXPANDED QUERY DATASET

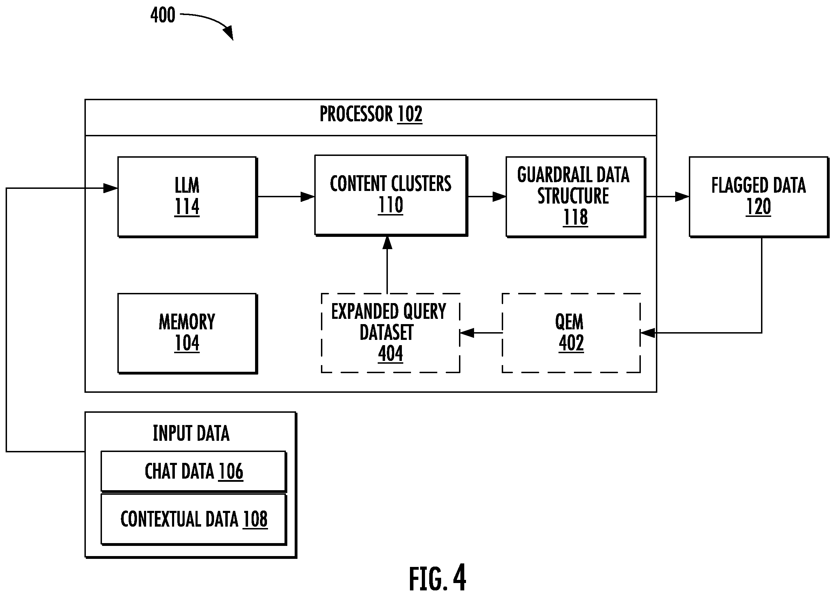

Referring now to Figure 4, an exemplary embodiment of a system for fine-tuning a boundary of one or more content clusters based on the expanded query dataset.

The operations may include generating, using a query expansion model (QEM) 402, an expanded query dataset 404 based on the flagged data 120. As used in the current disclosure, the query expansion model is a model that is configured to generate an expanded query dataset 404. QEM 402 can be consistent with the description of any machine-learning model described herein throughout the entirety of this disclosure, such as LLM 114. The QEM 402 operates by analyzing the flagged data 120 and the contextual data 108, enabling it to predict possible derivatives, synonyms, and related terms that share similar meanings to the flagged content. This is done with the goal of identifying and flagging terms that share the same or similar semantic meaning to the flagged data 120.

In an embodiment, the QEM 402 can include a neural network architecture. The QEM 402 can include multiple layers of interconnected nodes, or neurons, which are configured to process data in a hierarchical manner. Each layer of the neural network can be responsible for different aspects of the input, enabling the QEM 402 to learn complex patterns and relationships within the data. The flagged data 120 can be processed using these layers where the neural network analyzes the text and identifies key components that can be expanded upon.

The nodes in the QEM 402 can be organized in a structured network, such as a convolutional neural network, which includes an input layer of nodes, one or more intermediate layers, and an output layer of nodes. During the training of the QEM 402, connections between these nodes can be established by applying elements from the training dataset to the nodes.

As used in the current disclosure, the expanded query dataset 404 is a collection of terms, phrases, synonyms, and contextually related variations generated from flagged data 120. The goal of the expanded query dataset 404 is to broaden the systems 400 ability to identify content with similar meanings or implications, even if expressed differently. The derivatives within the expanded query dataset 404 may include synonyms, semantically related terms, and contextually relevant phrases that share similar meanings to the original flagged data 120. It may include additional variations that could reflect different expressions or forms of the flagged data 120. This expanded dataset allows the system to cast a wider net when identifying content that might share similar semantic features, even if it is worded differently or expressed in an alternative way.

The purpose of the expanded query dataset 404 is to increase the comprehensiveness of content moderation and classification. When chat data 106 is flagged for containing undesirable or inappropriate content, it might not always be a direct match with predefined problematic terms. However, the expanded query dataset 404 helps capture content that conveys similar meanings but is expressed with different vocabulary or phrasing. By generating and using the expanded query dataset 404, the system ensures that a broader range of potentially harmful or non-compliant content is identified, reducing the risk of missing problematic interactions due to variations in language or expression.

The expanded query dataset 404 may be used to refine or improve the system's understanding of the context and intent behind the flagged data 120. Since the QEM 402 uses contextual data 108 to generate this dataset, it ensures that the relationships between terms are captured in a way that considers the specific context in which they appear. For example, a word that might be benign in one context could have a different meaning or implication in another. The expanded query dataset 404 may be used to train the system to distinguish between such nuances, allowing it to make more accurate decisions when flagging content for review.

With continued reference to Figure 4, the operations may further include fine-tuning a boundary of one or more content clusters of the plurality of content clusters 110 based on the expanded query dataset 404. As the expanded query dataset 404 is generated, additional terms and phrases that should have been included in the initial content clusters 110 are identified. By analyzing the expanded query dataset 404, the system can identify nuances and variations in language that are relevant to the topics being discussed. These insights can be used to adjust the boundaries of the content clusters 110, ensuring that they capture a more comprehensive range of related content.

For example, if the expanded query dataset 404 reveals a set of new synonyms or related terms that are semantically linked to an existing content cluster 110, the system can adjust the cluster's boundaries to incorporate these new variations. This would allow the cluster to more accurately represent the diverse ways in which a particular topic or theme can be expressed. By expanding the boundaries of the cluster to include the terms identified in the expanded query dataset, the system reduces the risk of misclassifying data or overlooking important content.

Referring now to Figure 5, a block diagram of an exemplary Master Guardrail System (MGS) 502 is presented in accordance with embodiments of the present disclosure. The MGS 502 serves as a centralized framework designed to manage content moderation, filtering, and classification processes across a variety of remote computing devices 504A-B. The MGS 502 may include multiple components, such as all or portions of system 100, method 200, system 300, and system 400, among others, which work together to facilitate the generation and maintenance of the guardrail data structure 118. Additionally, the MGS 502 may be configured to determine content clusters 110 and update cluster memberships 112. By integrating these various systems, the MGS 502 enables the efficient definition, updating, and application of the guardrail data structure 118 across multiple remote computing devices 504A-B.

The remote computing devices 504A-B may be used to facilitate the practical application of the guardrail data structure 118. Located away from the master guardrail system 502, these remote computing devices 504A-B may be responsible for applying the guardrail data structure 118 to incoming chat data 106 in real time. Acting as intermediaries between end users and the MGS 502, the remote computing devices 504A-B may be used to ensure that the content shared or received adheres to the established guidelines. The remote computing devices 504A-B may also receive interaction data 116 from end users, which may then be transmitted to the MGS 502 for analysis and processing. In some cases, these remote computing devices 504A-B may receive instructions from the master guardrail system 502 to update the guardrail data structure 118.

The master guardrail system 502 can provide instructions to the remote computing devices 504A-B to update the guardrail data structure 118 by changing cluster memberships 112. When the MGS 502 identifies that a content cluster 110 needs to be updated, it can instruct one or more remote computing devices 504A-B to fine-tune the guardrail data structure 118 based on these changes. Once the remote computing devices 504A-B receive the updated guardrail data structure 118, they can apply it to classify the incoming chat data 106 into one or more content clusters 110 based on the contextual data provided.

Furthermore, the MGS 502 can customize the guardrail data structure 118 for each remote computing device 504A-B within a plurality of remote computing devices, tailoring the filtering and moderation rules to meet specific needs. Although Figure 5 depicts remote computing devices 504A- B a person skilled in the art should know that the remote computing devices mentioned herein can include a first, second, third, up and including an Nth remote computing device 504.

The customization of the guardrail data structure 118 can be based on a variety of factors, including client preferences, the nature of the platform, or the type of users interacting with the system. The master guardrail system 502 can also adjust the guardrail data structure 118 based on interaction data 116 received from each remote computing device's end users or administrators. By analyzing user behavior, flagged content, and other contextual data, the MGS 502 fine-tunes the guardrail data structure 118 to align with the specific requirements of each client or platform.

In addition to content classification, the remote computing devices 504A-B use the updated guardrail data structure 118 to identify flagged data 120 within the chat data 106. By applying the refined guardrail data structure 118, the remote devices can accurately flag potentially harmful or non-compliant content in real time.

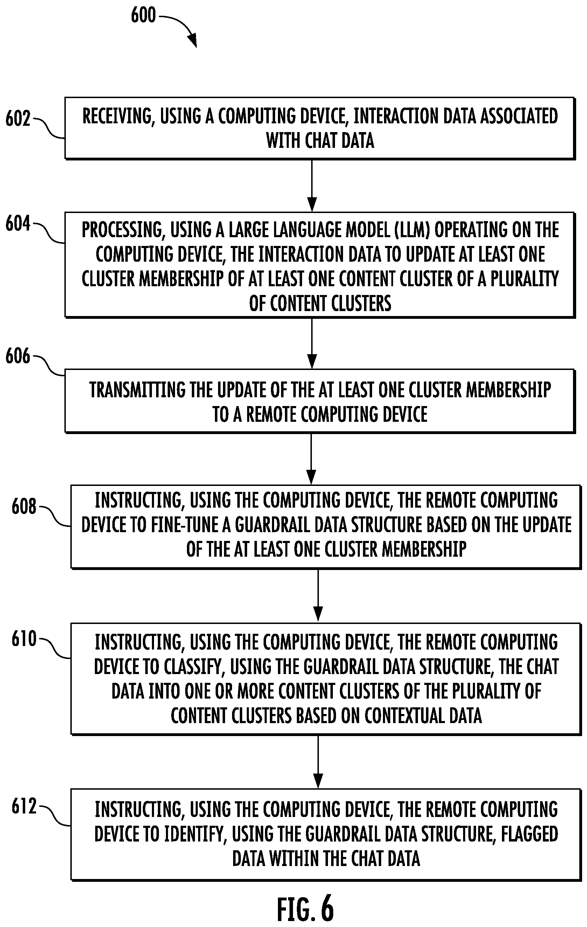

Referring now to Figure 6, an exemplary flow diagram for a method for generating a guardrail data structure in accordance with embodiments of the present disclosure.

At operation 602, the method includes receiving, using a computing device, interaction data associated with chat data, wherein the receiving the interaction data comprises receiving the interaction data from a first user of a plurality of users of a guardrail data structure.

At operation 604, the method includes processing, using a large language model (LLM) operating on the computing device, the interaction data to update at least one cluster membership of at least one content cluster of a plurality of content clusters.

At operation 606, the method includes transmitting the update of the at least one cluster membership to a remote computing device.

At operation 61, the method includes instructing, using the computing device, the remote computing device to fine-tune a guardrail data structure based on the update of the at least one cluster membership.

At operation 610, the method includes instructing, using the computing device, the remote computing device to classify, using the guardrail data structure, the chat data into one or more content clusters of the plurality of content clusters based on contextual data.

At operation 612, the method includes instructing, using the computing device, the remote computing device to identify, using the guardrail data structure, flagged data within the chat data.

In an embodiment, the method may additionally include verifying, by the LLM, the plurality of interaction data using a verification process. The verification process may include processing, by the LLM, the at least one chat datum to generate a vector; comparing the vector to the plurality of content clusters; and verifying the plurality of interaction data based on the comparing.

In a second embodiment, the method may additionally include processing, using the computing device, the interaction data to generate training data, wherein the training data comprises examples of chat data correlated to examples of cluster memberships; and training, using the computing device, the LLM using the plurality of training data.

In a third embodiment, the method may additionally include generating, using a query expansion model, an expanded query dataset based on the flagged data. The method may additionally include fine-tuning a boundary of one or more content clusters of the plurality of content clusters based on the expanded query dataset.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A system for managing a guardrail data structure, comprising:
one or more processors; and
one or more transitory or non-transitory computer-readable media storing instructions that are executable to cause the one or more processors to perform operations, the operations comprising:
receiving, from a first user of a plurality of users of a guardrail data structure, interaction data associated with chat data;
processing, by a large language model (LLM), the interaction data to determine an update to at least one cluster membership of a plurality of content clusters;
transmitting the update of the at least one cluster membership to a remote computing device; and
instructing the remote computing device to update the guardrail data structure based on the update to the at least one cluster membership.

2. The system of claim 1, wherein the operations further comprise
instructing the remote computing device to identify, using the updated guardrail data structure, flagged data based on the chat data; and/or
verifying, by the LLM, the interaction data using a verification process; and/or
generating a notification based on the update to the guardrail data structure.

3. The system of claim 2, wherein identifying the flagged data comprises classifying, using the guardrail data structure, the chat data into one or more content clusters of the plurality of content clusters based on contextual data.

4. The system of claim 2, wherein the operations further comprise instructing the remote computing device to remove the flagged data from the chat data.

5. The system of claim 2, wherein the verification process comprises:
processing the chat data associated with the interaction data to generate a vector;
comparing the vector to the plurality of content clusters; and
verifying the interaction data based on the comparing.

6. The system of claim 1, wherein the operations further comprise:
processing the interaction data to generate training data, wherein the training data comprises examples of chat data correlated to examples of cluster memberships; and
training the LLM using the plurality of training data.

7. A method for maintaining a guardrail data structure, comprising:
receiving, using a computing device, interaction data associated with chat data, wherein the receiving the interaction data comprises receiving the interaction data from a first user of a plurality of users of a guardrail data structure;
processing, using a large language model (LLM) operating on the computing device, the interaction data to update at least one cluster membership of at least one content cluster of a plurality of content clusters;
transmitting the update of the at least one cluster membership to a remote computing device;
instructing, using the computing device, the remote computing device to:
fine-tune a guardrail data structure based on the update of the at least one cluster membership;
classify, using the guardrail data structure, the chat data into one or more content clusters of the plurality of content clusters based on contextual data; and
identify, using the guardrail data structure, flagged data within the chat data.

8. The method of claim 7, wherein
the method further comprises verifying, by the LLM, the interaction data using a verification process; and/or
the method further comprises generating, using the computing device, a notification based on the flagged data; and/or
instructing the remote computing device further comprises instructing the remote computing device to remove the flagged data from the chat data; and/or
the method further comprises generating, using a query expansion model operating on the computing device, an expanded query dataset based on the flagged data.

9. The method of claim 8, wherein the verification process comprises:
processing, by the LLM, the chat data associated with the interaction data to generate a vector;
comparing the vector to the plurality of content clusters; and
verifying the interaction data based on the comparing.

10. The method of claim 8, wherein the method further comprises fine-tuning, using the LLM, one or more cluster memberships of one or more content clusters of the plurality of content clusters based on the expanded query dataset.

11. The method of claim 7, wherein the method further comprises:
processing, using the computing device, the interaction data to generate training data, wherein the training data comprises examples of chat data correlated to examples of cluster memberships; and
training, using the computing device, the LLM using the plurality of training data.

12. A system for managing a guardrail data structure, comprising:
one or more processors; and
one or more transitory or non-transitory computer-readable media storing instructions that are executable to cause the one or more processors to perform operations, the operations comprising:
receiving input data comprising chat data, interaction data associated with the chat data, and contextual data;
processing the interaction data to generate training data, wherein the training data comprises examples of chat data correlated to examples of cluster memberships;
determining, using a large language model (LLM), a plurality of cluster memberships associated with a plurality of clusters as a function of the input data;
generating, using the LLM, a guardrail data structure based on the determining; and
transmitting the guardrail data structure to a remote computing device.

13. The system of claim 12, wherein the operations further comprise:
receiving chat data; and
identifying flagged data from the chat data using the guardrail data structure.

14. The system of claim 13, wherein identifying the flagged data comprises
classifying, using the guardrail data structure, the chat data into one or more content clusters of a plurality of content clusters based on the contextual data.

15. The system of claim 12, wherein the operations further comprise:
processing the input data to generate training data, wherein the training data comprises examples of chat data correlated to examples of cluster memberships; and
training the LLM using the plurality of training data.
